# EUROPEAN PATENT APPLICATION

(11) **EP 4 394 348 A1**
(43) Date of publication of application: **03.07.2024**
(21) Application number: 22217372.6
(22) Date of filing: 30.12.2022
(51) Int. Cl.: G01N 1/42, A01N 1/02, B01L 1/02, B01L 7/00, G01N 33/487, G01N 35/10, G01N 1/31, G01N 35/00

(54) **METHOD OF AND APPARATUS FOR VITRIFYING AQUEOUS SAMPLES**

(71) Applicant: Universiteit Maastricht, 6211 LK Maastricht (NL); Academisch ziekenhuis Maastricht, 6229 HX Maastricht (NL)
(72) Inventor: Ravelli, Raimond, 6211 LK Maastricht (NL); Huysmans, Pascal, 6211 LK Maastricht (NL); Premaraj, Navya, 6211 LK Maastricht (NL); Knoops, Kevin, 6211 LK Maastricht (NL)
(74) Representative: De Vries & Metman

(57) **Abstract**

The invention relates to a method of and apparatus for vitrifying an aqueous sample. The method comprises the steps of providing a sample held by a sample carrier (3), regulating the temperature in a confined space (6) to a temperature above the ice nucleation temperature of the sample, guiding the sample through the confined space (6) containing the gas at the regulated temperature and positioning the sample in line with at least one nozzle (10) for a cryogenic liquid, which at least one nozzle (10) is located in the confined space (6) or outside the confined space (6), where the sample is maintained above the ice nucleation temperature of the sample, and vitrifying the sample by jetting a cryogenic liquid from the at least one nozzle (10) and onto the sample.

## Description

The invention relates to a method of vitrifying an aqueous sample, such as a biological sample, e.g. cells, tissue and organoids, or macromolecular crystals, solutions with nanoparticles, such as proteins, colloids, and gels, comprising the steps of providing a sample held by a sample carrier and jetting a cryogenic liquid from at least one nozzle and onto the sample. The invention further relates to an apparatus for vitrifying aqueous samples.

WO 02/077612 relates to a device for preparing specimens for a cryo-electron microscope, comprising an environmental chamber, a holder for a sample or a carrier, and at least one blotting element to which a medium for absorbing liquid is or can be attached, both disposed in the environmental chamber, and a cooling medium for cooling down said sample. The said blotting element can be moved towards the sample or carrier in a controlled manner.

WO 2017/220750 relates to a method of and apparatus for preparing a sample for imaging or diffraction experiments under cryogenic conditions, comprising the steps of applying a sample to sample carrier, such as a film on a support, in particular a grid comprising such a film on a support, or removing residual medium, typically liquid, from an incubated sample on a film on a support, and vitrifying the sample. The sample is vitrified by directing a jet of liquid coolant to the center of the film and onto the sample.

US 2017/030626 relates to a cryogenic cooling manifold and methods incorporating a cryogenic cooling manifold for managing the gas layer(s) above a liquid cryogen to control cooling temperature-time profiles and ice formation for microliter and smaller samples that are plunged through the gas and into the liquid cryogen.

Cells and other biological material can be stored long term at ultracold temperatures. However, for the cells to remain vital (alive after thawing) and their ultrastructure to be well preserved, it is very important to avoid ice crystallization. Ice crystallization, within or just outside the cells, could occur when the sample is frozen or thawed. Nature uses cryoprotectants such that animals (like the Canadian Darkling Beetle) can survive a freeze-thaw cycle. Cryoprotectants are also used in labs to preserve biological material, e.g. DMSO for freezing human embryos, and BSA for cell-preparation for cryo-electron microscopy. These cryoprotectants might compromise the vitality as well as the (ultra)structure of the cells themselves, for example due to high osmolarity.

It is an object of the present invention to reduce and even overcome the need for cryo-protectants while cryo-preserving cells.

To this end, the method according to the present invention is comprises the steps of:
providing a sample held by a sample carrier,
regulating the temperature in a confined space, such as a chamber, e.g. a tunnel, that is open or openable at opposite ends, to a temperature above the ice nucleation temperature of the sample,
guiding the sample through the confined space containing the gas at the regulated temperature and positioning the sample in line with at least one nozzle for a cryogenic liquid, which at least one nozzle is located in the confined space or outside, e.g. below, the confined space, where the sample is maintained above the ice nucleation temperature of the sample, typically -3 °C or higher, and
vitrifying the sample by jetting a cryogenic liquid from the at least one nozzle and onto the sample.

In an embodiment, the chamber is flushed with dry gas, preferably having a humidity of less than 15%.

Optionally, the method comprises the further step of transferring, e.g. moving, e.g. forwarding along a fixed path, the vitrified sample, held by the carrier, into a cryogenic liquid for further cooling and/or storage. It is preferred that a cryogenic liquid for further cooling, e.g. to cool the sample carrier, is located in line with, e.g. below, the confined space and the position where the sample is vitrified by means of the jet(s).

With the present invention biological samples including cells, (thin sections, e.g. slices, of) tissue and organoids, and macromolecular crystals, solutions with nanoparticles, such as proteins, colloids, and gels can be preserved until and/or triggered just prior to, e.g. less than 5 milliseconds (ms), preferably less than 1 ms, preferably less than 0.5 ms, preferably less than 0.2 ms, prior to vitrification with one or more jets of cryogenic liquid. Thus, for example, it can be ensured, or at least the chance increased, that cells remain vital (and thus will be alive after thawing) and/or that their ultrastructure is well preserved, even without the use or with limited use of cryo-protectants. In an example, the sample is exposed to an excitation source, e.g. to induce neurotransmission in a cellular sample or conformational changes in a single particle sample, such as changes in the shape of a macromolecule, and the excited condition is vitrified. Examples of conformational changes include signal-transduction of light-sensitive membrane proteins, isomerisation of a chromophore, the opening and closing of the channel of a membrane protein, and structural changes occurring upon the binding of a pathogen surface protein to a host cell receptor, such as RBD of the spike protein of SARS-CoV-2 binding to the cell receptor ACE2.

Sample carriers include, and are not limited to, loops, discs, spoons, and films, such as perforated films. They are typically made of a biologically inert material such as thin polymer film, nylon, or a metal such as Au/Pt/Ti, or Si-based carriers and attached to a base, e.g. via a pin, which can be loaded onto the machine. The width of the wire of a loop will define the thickness of the sample when such loop is loaded by dipping it into a solution of that sample. A loop may minimize the support that surrounds the sample. The sample carrier could also exist of a surface, such as thin bioinert film, on which adherent cells could be grown. Again, such carrier will be attached to a base, e.g. via a pin. The carrier could be smaller than the diameter of the jet, however, for example in the case of the use of an EM grid, it could also be larger than the jet, in which case the jet will be directed onto the center and then outwards. After sample cooling, the sample carrier with its sample can be detached from the base, e.g. by unclamping, unscrewing or cutting.

Typically, the samples have a thickness less than 200 pm, preferably less than 100 µm, preferably less than 50 µm.

In an embodiment, the temperature in the confined space is regulated by flushing the confined space with a gas, preferably a gas having a controlled temperature and humidity and/or a gas having the desired ('soll') temperature or higher.

The time required to reach the desired conditions can be shortened and/or use of the materials and energy reduced, if during flushing at least one end of the confined space is closed.

In an embodiment, the temperature in the confined space is regulated by heating the wall of the confined space.

Also, the method may comprise the steps of providing a container for a cryogenic liquid, the container having an opening, e.g. in its top, which is in line with the confined space and the position where the sample is vitrified by means of the jet(s).

In an embodiment, the sample held by the sample carrier is forwarded through the confined space and, if present, into the cryogenic liquid in the container, along an at least substantially straight path.

In an embodiment, the confined space is moved between at least a first position relatively far from the at least one jet and at least a second position relatively close to the at least one jet.

In an embodiment, the temperature in the confined space is regulated while the confined space is relatively close to the jets.

The jet or jets and the reservoir for the cryogen are typically at a temperature far below, e.g. in a range from 90 to 140K below the ice nucleation temperature of the sample. With these measures, regulating the temperature in the confined space is faster and/or more robust. When the confined space, such as a (climate) tunnel, has been lowered towards the container, a substantially closed path is formed by at least the volume of the tunnel, the opening in the container, and the container, while substantially avoiding heat conduction between the container and the (wall of the) tunnel.

The invention also relates to a method comprising the steps of:
providing a sample held by a sample carrier,
regulating the temperature in a confined space, such as a chamber, e.g. a tunnel, that is open or openable at opposite ends, to a temperature above the ice nucleation temperature of the sample,
guiding the sample held by the sample carrier through the confined space containing the gas at the regulated temperature and positioning the sample in line with at least one nozzle for a cryogenic liquid, which at least one nozzle is located in the confined space or outside, e.g. below, the confined space, where the sample is maintained above the ice nucleation temperature of the sample, and
vitrifying the sample by jetting a cryogenic liquid from the at least one nozzle and onto the sample. In an embodiment the sample, when it is positioned in line with at least one nozzle for a cryogenic liquid and prior to vitrification, is exposed to an excitation source, e.g. to induce neurotransmission or conformational changes, such as changes in the shape of a macromolecule, and the sample is vitrified in the state it reached upon excitation. Examples of excitation means include light activation, e.g. by a laser or a powerful led source, and electrical stimulation. Examples of conformational changes include isomerization of a chromophore and the opening and closing of a membrane channel protein.

The invention also relates to an apparatus for vitrifying aqueous samples, such as biological samples including cells, (thin sections, e.g. slices, of) tissue and organoids, and macromolecular crystals, solutions with nanoparticles, such as proteins, colloids, and gels, comprising a movable holder for a sample carrier for an aqueous sample,
a chamber defining a confined space,
means for regulating the temperature (of the gas) in the confined space to a temperature above the ice nucleation temperature of a selected sample,
at least one nozzle for jetting a cryogenic liquid onto the sample, which at least one nozzle is located in the confined space or outside, e.g. below, the confined space, and
an actuator, e.g. a motor, for moving the sample carrier held by the holder through the confined space and in line with at least one nozzle for a cryogenic liquid.

In this context, outside the confined space includes locations sufficiently close and/or in communication with the confined space to ensure that the temperature at the at least one nozzle, e.g. between two nozzles, when the sample is located there before vitrification, is substantially equal to the temperature in the chamber, preferably not more than 10% lower, expressed in degrees Kelvin, preferably not more than 8% lower than the temperature in the chamber. E.g., if the temperature in the chamber is 305 K, said temperature between the nozzles is preferably 275 K or higher, preferably 280 K or higher.

In an embodiment, the chamber comprises an inlet and an outlet for a gas for flushing the confined space to regulate the temperature in the confined space. The gas preferably has the desired ('soll') temperature or higher. Flushing can be obtained e.g. by a (relatively) high pressure source of the gas at the inlet and/or a lower pressure source, e.g. a vacuum pump, at the outlet.

In an embodiment, the wall of the chamber comprises one or more heating surfaces to heat the gas in the confined space. E.g. the wall of the confined space is made of a heat conducting material or comprises sections made of a heat conducting material, such as a metal, e.g. aluminum or steel, and heating elements are provided to supply heat to the conducting material. In another embodiment, the lower rim of the chamber is made from a thermally insulation material, such as a polymer.

The time required to reach the desired conditions can be shortened and/or use of materials and energy reduced, if the apparatus comprises a shutter to close at least one end of the confined space, in particular when the confined space is being flushed with a gas.

In an embodiment, the apparatus comprises a container for a cryogenic liquid, the container having an opening, e.g. in its top, which is in line with the confined space and the position where the sample is vitrified by means of the jet(s). The nozzles for jetting cryogenic liquid may be integrated in the container, e.g. in the rim of the opening in the container.

In an embodiment, the chamber is movable between at least a first position relatively far from the at least one jet and at least a second position relatively close to the at least one jet.

The present invention controls the environment through which the sample is moved and/or the environment at the jet or jets, just prior to vitrification. It allows preservation of the biological material as well as the triggering of certain events within the sample just (down to 0.1 ms or less) prior to cryocooling.

Suitable cryogenic liquids include liquid ethane, liquid ethane-propane mixtures, helium, and liquid nitrogen and, and nitrogen flush. Cryogenic liquids preferably have a temperature in a range from 4 to 150 K, preferably in a range from 4 to 120 K.

To suppress or prevent the formation of artifacts in the vitrified sample, in an embodiment, at least one jet of liquid coolant is simultaneously directed to each side of the support. It is preferred that the jets are synchronized to within 0,5 ms from each other.

In an embodiment, the velocity of the jets of coolant is in a range from 0.1 to 50 m/s, preferably in a range from 0.3 to 20 m/s, and/or the combined mass flow rate of the jets is in a range from 0.01 to 200 L/min. In an example, two jets are employed having a diameter of 1 mm or 10 mm: 20 m/s, 1 mm diameter gives 2 L/min, 0.3 ms/, 1mm diameter gives 0.03 L/min, 20 m/s, 10 mm diameter gives 190 L/min.

In another embodiment, the sample, the sample carrier, and part of the distal end of the holder are advanced, after vitrification of the sample, into a cryogenic liquid to cool the holder and prevent heat from the holder to undo vitrification.

In another embodiment, the apparatus comprises two of more modules enabling assembly and disassembly of the apparatus and/or the apparatus, modular or in a single (main) piece, has a height and depth of 60 centimeters or less, preferably 33 centimeters or less. These aspects enable that the apparatus can be placed in and taken from a biosafety-cabinet.

US 2010/181495 relates to method and a device for preparing specimens for a cryo-electron microscope, wherein a carrier is fixed to a holder, sample liquid is applied to the carrier, and a blotting device for removing excess sample liquid from the carrier by means of the absorbing medium is applied.

WO 2017/005297 relates to a preparation system for preparing a sample for electron microscopy, comprising a liquid handling system, a support structure that is configured to accommodate the sample, and a temperature-controlled stage that is configured to keep said support structure at a pre-defined temperature when the support structure is arranged on the temperature-controlled stage, e.g. at a dew point temperature of the environment, with the possibility of establishing a small offset temperature to induce evaporation/condensation.

J.C. Gilkey et al., "Advances in Ultrarapid Freezing for the Preservation of Cellular Ultrastructure", Journal of Electron Microscopy Technique, 3:177-210 (1986) addresses, amongst other things, jet freezing of large and sturdy samples.

R. van Venetië, "Propane jet-freezing: a valid ultra-rapid freezing method for the preservation of temperature dependent lipid phases", Journal of microscopy, vol. 123, pages 287-292 (1981), relates to a temperature controlled specimen stage on a jet-freezing apparatus, wherein the specimen is placed between two silver plates.

N.L. Burstein et al., "Cryofixation of tissue surfaces by a propane jet for electron microscopy", Micron, vol. 9, pages 191-198 (1969), relates to the rapid freezing of tissues, e.g a cornea, by exposure to a high velocity jet of liquid propane at its freezing point.

WO 2013/152239 relates to a sample vitrification system, which includes a capsule structure configured for carrying a biological sample within a compartment while the sample is subjected to ultra-rapid freezing by way of a cryogenic coolant jet.

W.B. Bald, "The relative merits of various cooling methods", Journal of microscopy, vol. 140, pages 17-40 (1985), discusses three different methods of rapidly cooling specimens prior to microscopical analysis.

The invention will now be explained in more detail with reference to the Figures, which show an embodiment of the present invention.
Figure 1 is a photo of an apparatus according to the present invention for vitrifying aqueous samples.
Figures 2A is a cross-section of an apparatus according to the present invention for vitrifying aqueous samples.
Figures 2B to 2E are cross-sections of part of the apparatus shown in Figure 2A, illustrating a sequence of steps in the vitrification of an aqueous sample.
Figures 3A and 3B are temperature profiles (in Kelvin) in cross-sections of part of the apparatus shown in Figure 2A, illustrating the effect of the present invention.

The Figures show an apparatus 1 for (semi)automated vitrification of an aqueous sample, which apparatus comprises a movable holder 2 for a sample carrier 3 for an aqueous sample, e.g. a carrier having a loop that picks up an aqueous sample when the loop is dipped in a solution of the sample. The apparatus is further provided with a movable chamber 5 defining a confined space 6. The chamber comprises in- and outlets 7, e.g. opposite each other, for a gas for flushing the confined space to regulate the temperature in the confined space. In addition, the wall of the chamber is heated through thermal conductive contact with one or more electrical heating elements (not shown) to heat the gas in the confined space. Sensors can be provided in the chamber to measure temperature and humidity of the gas inside. Also, a cover 8, such as a lid or shutter, is provided to close the top end of the chamber and thus the confined space.

At least one nozzle 10 for jetting a cryogenic liquid onto the sample is located in the confined space or just outside the confined space.

A container 11 for a cryogenic liquid, such as liquid ethane, is located below the chamber, and has an opening 12, e.g. in its top, which opening is in line with the confined space and the position where the sample is vitrified by means of the jet(s). The example shown in the Figures has two nozzles 10 opposite each other, which nozzles are integrated in the rim of the opening in the container and are formed by the discharge ends of pipes that communicate with their feed ends with the cryogenic liquid in the container. The container is surrounded by and connected to a further, outer container 13 for a further cryogenic liquid, e.g. liquid nitrogen. A vial 14 for storing the sample under cryogenic conditions is located in the outer container.

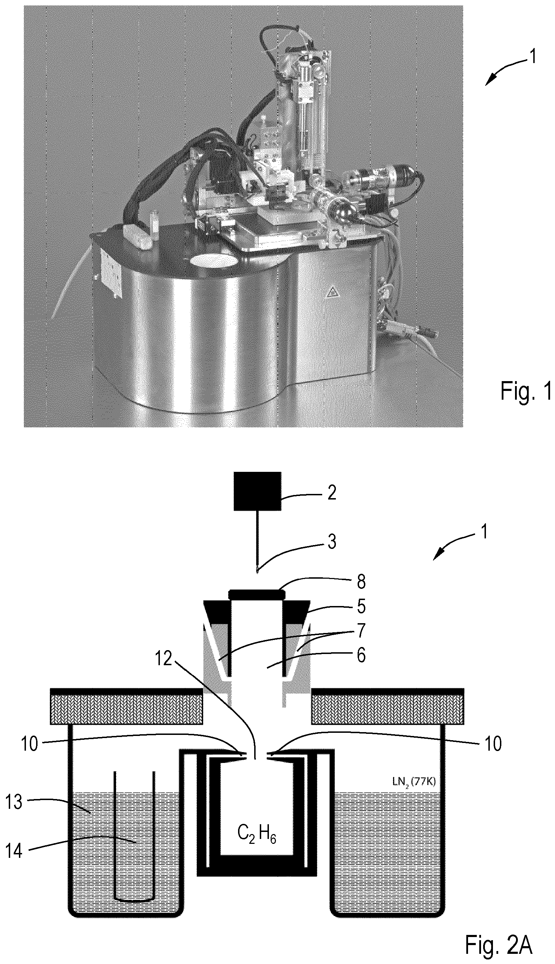

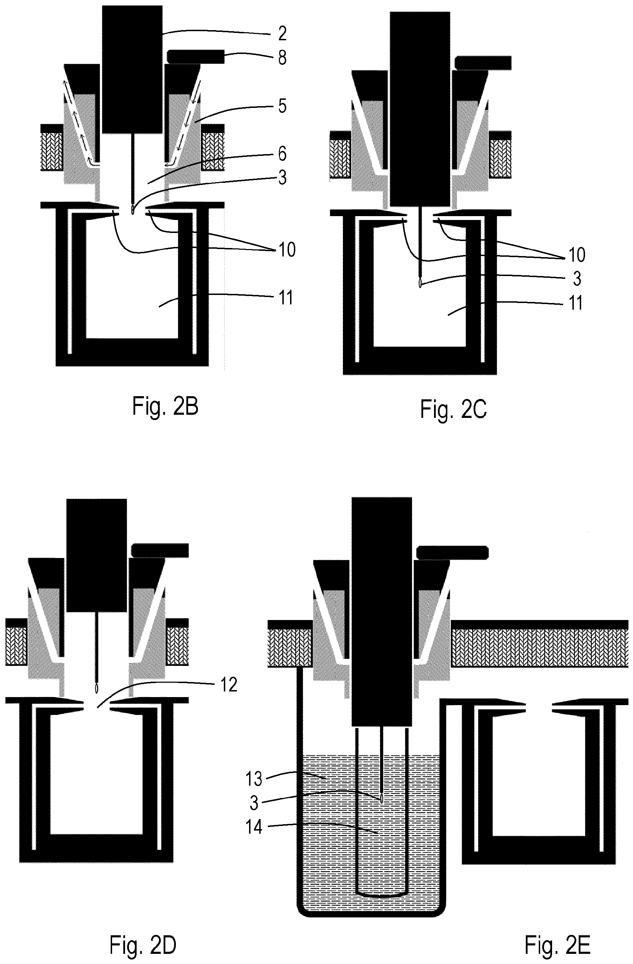

The chamber is movable between a first or lower position (Figures 2B and 2C) relatively close to the jets, a second or upper position (Figure 2A) relatively far from the jets, and, as will be discussed below, a third and lateral position above the vial (Figures 2D and 2E). Motors, such as linear and rotary stepper motors, provided for moving the sample carrier held by the holder through the confined space and in line with at least one nozzle for a cryogenic liquid to move the chamber between the various positions and to open and close the cover.

In a detailed example, during operation, an aqueous sample sits at the end of a sample carrier at a temperature of 298 K. The chamber is in it upper position, as shown in Figure 2A, the cover is open, the outer container is filled with liquid nitrogen at 79 K, and the inner container is filled with liquid ethane at 93 K. The chamber moves down, cold dry nitrogen escapes from the outer container through the chamber upwards.

When the chamber is in its lower position, the cover 8 is closed (arrow in Figure 2A) and flushing of the chamber is initiated increasing, in approximately 5 seconds, the temperature in the chamber and directly below the chamber, between the nozzles, to a temperature well above the ice nucleation temperature of the sample, e.g. to 300 K or higher. The ethane in the inner container is maintained at approximately 93 K by the surrounding nitrogen.

Next, shown in Figure 2B, the cover is opened and the sample is moved quickly through the chamber to a position between the nozzles, where the sample is vitrified by jetting liquid ethane from the nozzles.

Surplus liquid ethane is collected in the container below. After vitrification, the sample is moved further down and submerged in the cryogenic liquid, as shown in Figure 2C, thus further cooling the sample carrier, i.e. removing heat that might compromise (thaw) the vitrified sample.

Next, the chamber is moved upwards, allowing cold dry nitrogen gas to fill the space between the bottom of the chamber and the top of the ethane container, ensuring a temperature in this region that is lower than 136 K (glass-transition temperature of water) while the sample remains in the cryogenic liquid, e.g. for 5-10 seconds.

The sample is moved up, shown in Figure 2D, into the cold zone (< 136 K) between the bottom of the chamber and the top of the ethane container. Next, the sample is moved sideways, through the cold dry nitrogen gas, positioned above the vial, and lowered into the vial for storage and, later, transport.

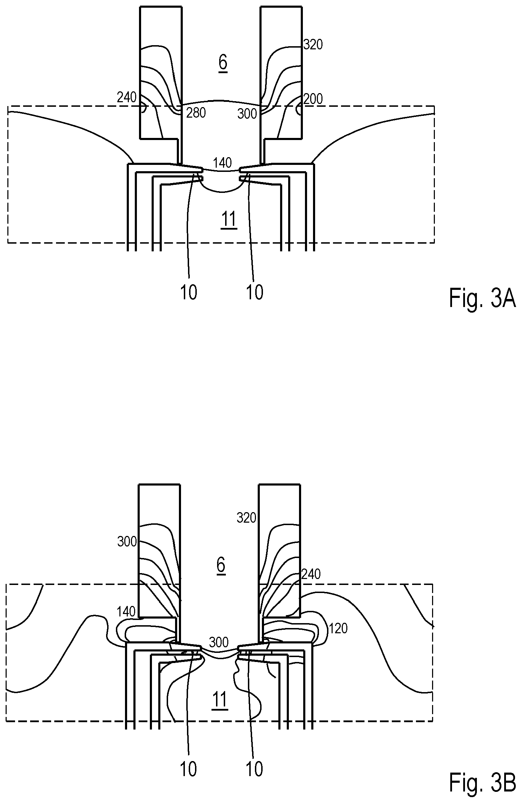

With the present invention biological samples including cells, (thin sections, e.g. slices, of) tissue and organoids, and macromolecular crystals, solutions with nanoparticles, such as proteins, colloids, and gels can be preserved until and/or triggered just prior to vitrification with one or more jets of cryogenic liquid. This is illustrated in Figures 3A and 3B, which show temperature profiles in cross-sections of part of the apparatus shown in Figures 2A to 2E. Figure 3A shows temperatures when no flushing and heating is performed. The temperature of the gas in the chamber and between the nozzles is below 200 K resulting in freezing of and crystallisation in the sample prior to the jetting, thus possibly destroying the biological sample. Figure 3B shows the result of the method described in detail above, resulting in a temperature of the gas in the chamber and between the nozzles around 300 K, well above the ice nucleation temperature of the sample.

The invention is not restricted to the above-described embodiments, which can be varied in a number of ways within the scope of the claims. For instance, instead of two nozzles on opposite sides of the sample, the method and apparatus could use a single nozzle or e.g. three or more nozzles.

## Claims

1. Method of vitrifying an aqueous sample comprising the steps of
providing a sample held by a sample carrier (3),
regulating the temperature in a confined space (6) to a temperature above the ice nucleation temperature of the sample,
guiding the sample through the confined space (6) containing a gas at the regulated temperature and positioning the sample in line with at least one nozzle (10) for a cryogenic liquid, which at least one nozzle (10) is located in the confined space (6) or outside the confined space (6), where the sample is maintained above the ice nucleation temperature of the sample, and
vitrifying the sample by jetting a cryogenic liquid from the at least one nozzle (10) and onto the sample.

2. Method according to claim 1, wherein the temperature in the confined space (6) is regulated by flushing the confined space with a gas, preferably a gas having a controlled temperature and humidity.

3. Method according to any one of the claims 1 or 2, wherein during flushing at least one end of the confined space (6) is closed.

4. Method according to any one of the preceding claims, wherein the temperature in the confined space (6) is regulated by heating the wall of the confined space (6).

5. Method according to any one of the preceding claims, comprising the steps of providing a container (11) for a cryogenic liquid, the container (11) having an opening (12), which is in line with the confined space (6) and the position where the sample is vitrified by means of the jet (s) (10).

6. Method according to any one of the preceding claims, wherein the sample held by the sample carrier (3) is forwarded through the confined space (6) and, if present, into the cryogenic liquid in the container (11), along an at least substantially straight path.

7. Method according to any one of the preceding claims, wherein the confined space (6) is moved between at least a first position relatively far from the at least one jet (10) and at least a second position relatively close to the at least one jet (10).

8. Method according to any one of the preceding claims, wherein the sample, when it is positioned in line with at least one nozzle (10) for a cryogenic liquid and prior to vitrification, is exposed to an excitation source, and the sample is vitrified in the state it reached upon excitation.

9. Apparatus (1) for vitrifying aqueous samples comprising a movable holder (2) for a sample carrier (3) for an aqueous sample,
a chamber (5) defining a confined space (6),
means for regulating the temperature in the confined space (6) to a temperature above the ice nucleation temperature of a selected sample,
at least one nozzle (10) for jetting a cryogenic liquid onto the sample, which at least one nozzle (10) is located in the confined space (6) or outside the confined space (6), and
an actuator for moving the sample carrier (3) held by the holder (2) through the confined space (6) and in line with at least one nozzle (10) for a cryogenic liquid.

10. Apparatus (1) according to claim 9, wherein the chamber (5) comprises an inlet (7) and an outlet for a gas for flushing the confined space (6) to regulate the temperature in the confined space (6).

11. Apparatus (1) according to claim 10, wherein the wall of the chamber (5) comprises one or more heating surfaces to heat the gas in the confined space (6) and/or wherein the wall of the chamber (5) is thermally connected to one or more heating sources to heat the gas in the confined space.

12. Apparatus (1) according to any one of the claims 9-11, comprising a cover (8) to close at least one end of the confined space (6).

13. Apparatus (1) according to any one of the claims 9-12, comprising a container (11 for a cryogenic liquid, the container (11) having an opening (12), which is in line with the confined space (6) and the position where the sample is vitrified by means of the jet(s) (10).

14. Apparatus (1) according to any one of the claims 9-13, wherein the chamber (5) is movable between at least a first position relatively far from the at least one jet (10) and at least a second position relatively close to the at least one jet (10).

15. Apparatus (1) according to any one of the claims 9-14, comprising two of more modules enabling assembly and disassembly of the apparatus and/or the apparatus having a height and depth of 60 centimeters or less.
